# EUROPÄISCHE PATENTSCHRIFT

(11) **EP 3 305 611 B1**
(45) Veröffentlichungstag und Bekanntmachung des Hinweises auf die Patenterteilung: **03.04.2019**
(21) Anmeldenummer: 17001543.2
(22) Anmeldetag: 15.09.2017
(51) Int. Cl.: B60T 13/14, B60T 11/10

(54) **BREMSVORRICHTUNG**
BRAKING DEVICE
DISPOSITIF DE FREINAGE

(30) Priorität: 30.09.2016 DE 102016011779
(43) Veröffentlichungstag der Anmeldung: 11.04.2018
(73) Patentinhaber: HYDAC Accessories GmbH, 66280 Sulzbach/Saar (DE)
(72) Erfinder: Sauer, Stefan Christian, 66773 Schwalbach/Elm (DE)
(74) Vertreter: Bartels und Partner, Patentanwälte

(56) Entgegenhaltungen:
- WO-A1-2012/175927
- DE-A1-102008 024 019

## Beschreibung

Die Erfindung betrifft eine Bremsvorrichtung, insbesondere für von einem Zugfahrzeug gezogene Anhänger, zumindest bestehend aus einem Bremszylinder, einem hydraulischen Versorgungsspeicher, zwei Druckübersetzern, einer Steuerleitung sowie Ventilen.

Hydrauliksysteme zur Betriebssteuerung von mobilen Einheiten mit von einem Zugfahrzeug bewegbarem Anhänger sind Stand der Technik. Beispielsweise zeigt das Dokument DE 10 2007 056 361 B3 ein hydraulisches Lenksystem für einen Anhänger, das von einem über die Anhängerkupplung mit dem Zugfahrzeug verbundenen Ansteuerzylinder betätigbar ist. Das Dokument DE 10 2013 002 845 A1 zeigt ein über Verbindungsleitungen mit dem Zugfahrzeug verbundenes System zur Betätigung von Hubzylindern zur Achseinstellung am Anhänger.

Das Dokument DE 10 2008 024019 A1 offenbart eine Parkbremse, mit einem hydraulisch verstellbaren Kolben, der auf einen Bremsbelag wirkt, wobei der Kolben in der Parkstellung mittels einer Arretiereinrichtung arretierbar ist, wobei eine Steuereinrichtung die Parkbremse und die zusätzlich für die Aktivierung und Deaktivierung der Parkbremse erforderlichen Komponenten steuert, wobei durch das Betätigen des Bremspedals die Aktivierung der Parkbremse erfolgt.

Die vorliegende Erfindung stellt sich die Aufgabe, eine Bremsvorrichtung mit den eingangs genannten hydraulischen Komponenten zur Verfügung zu stellen, das als kompakte Baueinheit ausbildbar ist und sich durch ein besonders günstiges Betriebsverhalten auszeichnet.

Erfindungsgemäß ist diese Aufgabe durch eine Bremsvorrichtung gelöst, die die Merkmale des Patentanspruchs 1 in seiner Gesamtheit aufweist.

Die Kombination der eingangs genannten Hydraulikkomponenten mit der bei der Erfindung vorgesehenen Ansteuerung des zweiten Druckübersetzers mittels eines vom ersten Druckübersetzer mechanisch betätigten Steuerventils ermöglicht die Realisierung einer Bremsvorrichtung, die in Form eines kompakten, autarken Steuerblocks neben der Bremsfunktion für den Fahrbetrieb weitere Funktionen zur Verfügung stellt, wie vom Zugfahrzeug gesteuerten Parkbetrieb, manuellen Parkbetrieb und Notbremsung. Die Erfindung ermöglicht eine im Anhänger integrierte Blocklösung ohne zusätzliche Peripherie, mit geringem Bedarf an Einbauraum und geringem Montageaufwand sowie Materialeinsatz. An der ziehenden Einheit, wie einem Traktor, ist keine Modifikation erforderlich, d.h. die erfindungsgemäße Bremsvorrichtung ist in ein bereits bestehendes hydraulisches Bremssystem des Traktors integrierbar. Für die Parkbremse ist auf der gezogenen Einheit kein zusätzlicher Ölkreislauf erforderlich, so dass ein geringer Wartungsaufwand und niedrige Betriebskosten anfallen. Durch die autarke Ausbildung des Notbremssystems ist kein erneutes Ankuppeln der Zugeinheit zum Lösen der Notbremse erforderlich.

Bei vorteilhaften Ausführungsbeispielen weist der eine Druckübersetzer einen Ausgleichskolben in Form einer Doppelkolbeneinheit auf, der über einen ersten Fluidraum mit seiner kleinen Kolbenfläche an den Versorgungsspeicher, über einen zweiten Fluidraum mit seiner großen Kolbenfläche an eine Verbindungsleitung zwischen Steuerventil und dem anderen Druckübersetzer, über einen dritten Fluidraum mit seiner kleinen Kolbenstangenfläche an eine Umschalteinheit zum manuellen Bedienen der Bremsvorrichtung als Parkbremse und über einen vierten Fluidraum mit seiner großen Kolbenstangenfläche an die Umgebung angeschlossen ist. Durch die Belüftung des vierten Fluidraums zur Umgebung ist der Ausgleichskolben ohne Gegendruck bei der mechanischen Betätigung des Steuerventils bewegbar.

Vorteilhafterweise weist der zweite Druckübersetzer einen Schaltkolben in Form einer Doppelkolbeneinheit auf, der über einen ersten Fluidraum mit seiner kleinen Kolbenfläche an den Versorgungsspeicher und über einen zweiten Fluidraum mit seiner großen Kolbenfläche an die Verbindungsleitung angeschlossen ist. Hierbei ist das Verhältnis der wirksamen Kolbenflächen so bemessen, dass der Schaltkolben durch einen im Verhältnis zum Druck des Versorgungsspeichers niedrigen Steuerdruck gegen den Speicherdruck bewegbar ist.

Mit Vorteil ist die Anordnung hierbei so getroffen, dass der Schaltkolben des zweiten Druckübersetzers mechanisch ein Betätigungsventil ansteuert, das eingangsseitig an die eine Steuerleitung sowie an den Versorgungsspeicher und das ausgangsseitig an den jeweiligen Bremszylinder auf dessen Betätigungsseite angeschlossen ist. Bei über das Betätigungsventil hergestellter Verbindung der Steuerleitung mit den Bremszylindern sind diese im Fahrbetrieb unmittelbar durch den Druck der Steuerleitung betätigbar, die als Serviceleitung mit der Zugeinheit in Verbindung ist und den Bremsdruck führt, der vom Fahrer bei der Bremspedalbetätigung generiert ist.

Zwischen der einen Steuerleitung und dem Versorgungsspeicher kann eine Handpumpe zum Lösen des jeweiligen Bremszylinders angeordnet sein. Unabhängig vom Zugfahrzeug ist dadurch die aktivierte Parkbremse manuell lösbar.

Bei vorteilhaften Ausführungsbeispielen ist an die eine Steuerleitung ein Druckschließventil angeschlossen, das über ein weiteres zweites Betätigungsventil auf die Eingangsseite des Steuerventils geschaltet ist, wobei die Eingangsseite des Druckschließventils über ein drittes Betätigungsventil an den Versorgungsspeicher anschließbar ist.

Bei vorteilhaften Ausführungsbeispielen weist die Umschalteinheit mindestens ein Schaltventil auf, das eingangsseitig an den dritten Fluidraum mit der kleineren Kolbenstangenfläche des einen Druckübersetzers und ausgangsseitig an die Verbindungsleitung zwischen der einen Steuerleitung und der Handpumpe angeschlossen ist.

Dabei ist die Anordnung vorteilhafterweise derart getroffen, dass an die Eingangsseite des Schaltventils der Umschalteinheit die Ausgangsseite eines weiteren Schaltventils angeschlossen ist, das vorzugsweise über einen Seilzug fernbetätigbar ist und dessen Eingangsseite an den Versorgungsspeicher angeschlossen ist. Der Seilzug ist an der Steuerleitung derart befestigt, dass bei einem Abreißen der Steuerleitung das weitere Schaltventil derart schaltet, dass für eine Notbremsung der Druck des Versorgungsspeichers zur Notbremsung über das Betätigungsventil an den Bremszylindern wirkt.

Zusätzlich zur Steuerleitung als Serviceleitung kann eine zweite Steuerleitung vorhanden sein, die mit der Eingangsseite des Steuerventils verbunden ist, an der auch das Druckschließventil über das zweite Betätigungsventil angeschlossen ist. Vorzugsweise ist der Seilzug auch an der zweiten Steuerleitung angebracht, so dass auch bei deren Abreißen die Notbremsung erfolgt.

Gemäß dem Patentanspruch 11 ist Gegenstand der Erfindung auch eine Baueinheit für eine Bremsvorrichtung nach einem der Patentansprüche 1 bis 10, bestehend aus mindestens zwei Druckübersetzern, einem Versorgungsspeicher und Ventilen zum Ansteuern und Betätigen der Baueinheit.

Nachstehend ist die Erfindung anhand eines in der Zeichnung dargestellten Ausführungsbeispiels im Einzelnen erläutert. Es zeigen:
- Fig. 1: eine Seitenansicht eines Ausführungsbeispiels der erfindungsgemäßen Bremsvorrichtung;
- Fig. 2: in Symboldarstellung die Hydraulikschaltung des Ausführungsbeispiels der Bremsvorrichtung, wobei die Hydraulickomponenten in dem Zustand dargestellt sind, der dem Betriebszustand "Einleitung-Fahrbetrieb" entspricht;
- Fig. 3: die entsprechende Symboldarstellung der Hydraulikschaltung im Betriebszustand "Zweileitung-Fahrbetrieb"; und
- Fig. 4 bis 11: entsprechende Symboldarstellungen der Hydraulikschaltung, wobei weitere Betriebszustände, wie "Parkbetrieb" und "Notbremsung", dargestellt sind.

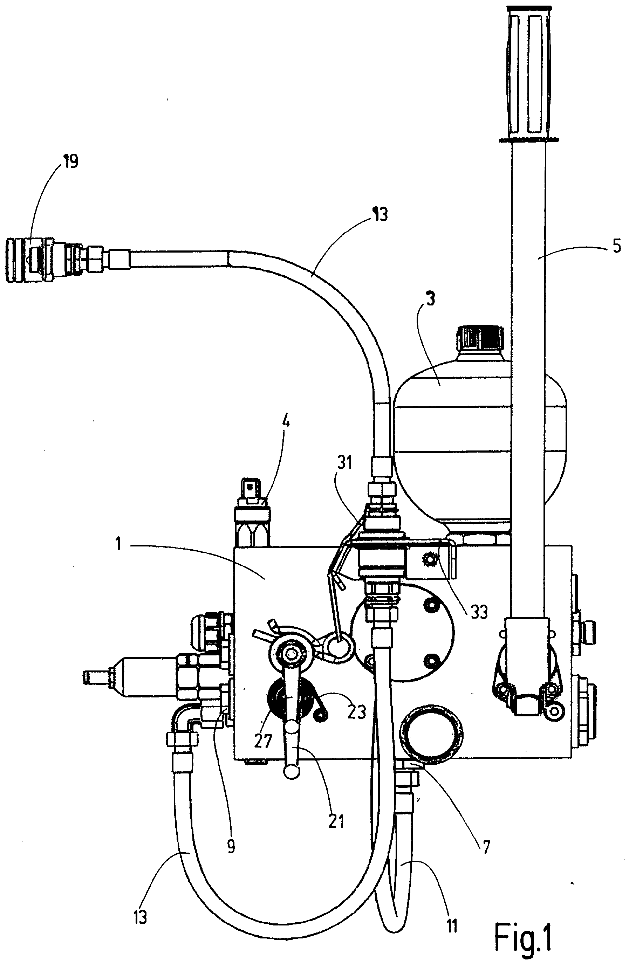

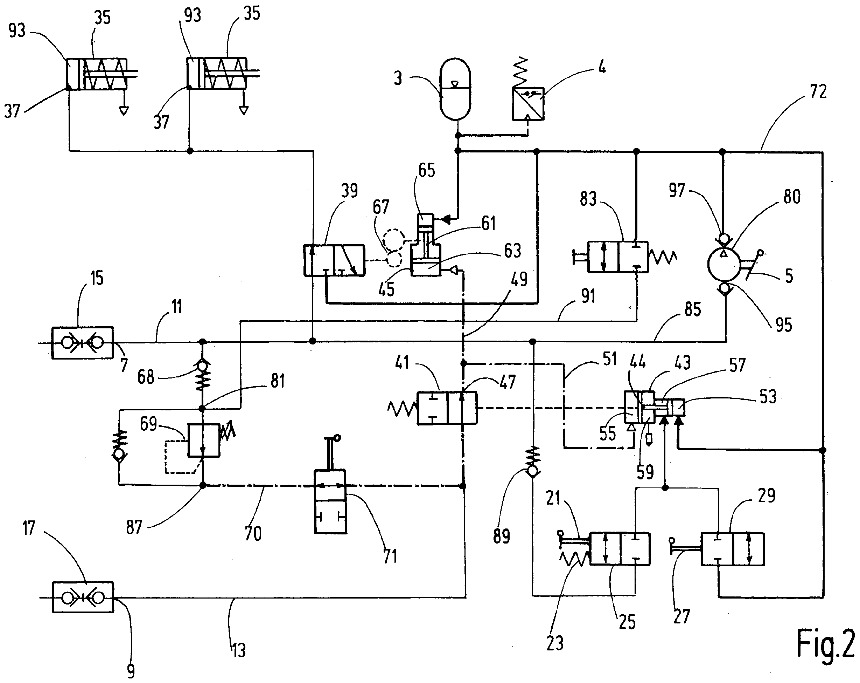

Die Komponenten der erfindungsgemäßen Bremsvorrichtung, wie sie in den Hydraulikschaltungen der Fig. 2 bis 11 in Symboldarstellung angegeben sind, sind mit einem in Fig. 1 gezeigten Steuerblock 1 zu einer Baueinheit zusammengefasst. Der Steuerblock 1 weist außer innenliegenden Komponenten, wie sie anhand der Fig. 2 bis 11 näher beschrieben sind, als äußere Anbauten unter anderem einen hydraulischen Versorgungsspeicher in Form eines hydropneumatischen Druckspeichers 3 mit zugeordnetem Druckwächter 4, einen Handhebel 5 zur Betätigung einer Handpumpe sowie Anschlussstellen 7 und 9 auf. Die Anschlussstelle 7 bildet die Verbindungsstelle für eine erste Steuerleitung 11, und die Anschlussstelle 9 bildet die Verbindungsstelle mit einer zweiten Steuerleitung 13. Diese sind über in den Fig. 2 bis 11 mit 15 bzw. 17 bezeichnete Schnellverschlusskupplungen mit mechanisch zu öffnendem Rückschlagventil mit einer jeweiligen Zugeinheit (wie Traktor) verbindbar. In Fig. 1 ist von den Schnellkupplungen 15, 17 lediglich für die zweite Steuerleitung 13 das eine Kupplungsteil 19 sichtbar. Ferner sind in Fig. 1 außenseitig ein manuell betätigbarer Stellhebel 21 für ein mittels Spiralfeder 23 rückstellbares Umschaltventil 25 sowie ein Stellhebel 27 zur manuellen Betätigung eines Schaltventils 29 sichtbar. Letzteres ist für die Auslösung einer Notbremsung (wie später ausgeführt) über einen Seilzug 31 mit beiden Steuerleitungen 11 und 13 derart verbunden, dass bei einem Abreißen einer oder beider Leitungen 11, 13 von dem zugehörigen, am Steuerblock 1 befestigten Leitungsträger 33 das Schaltventil 29 in die Öffnungsstellung gelangt.

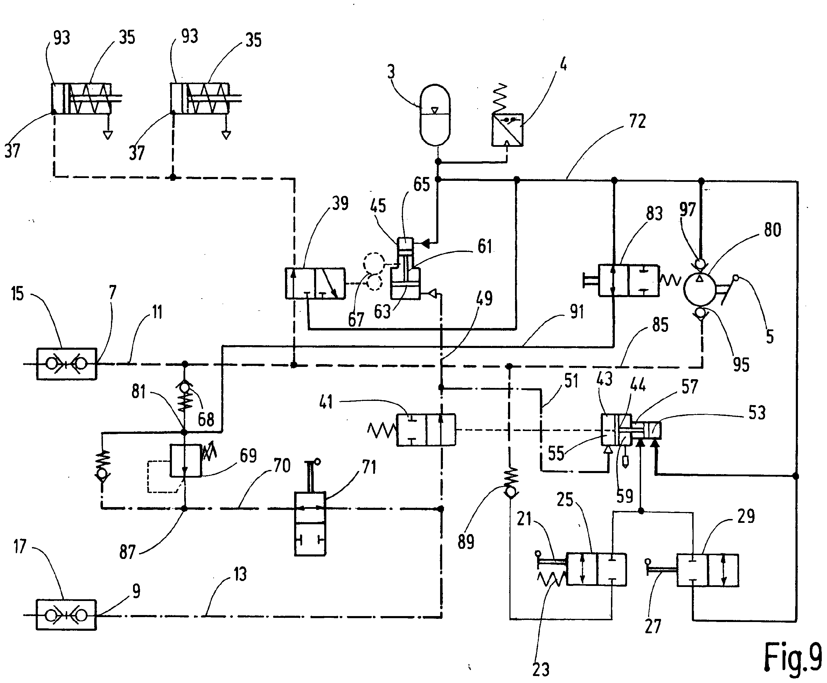

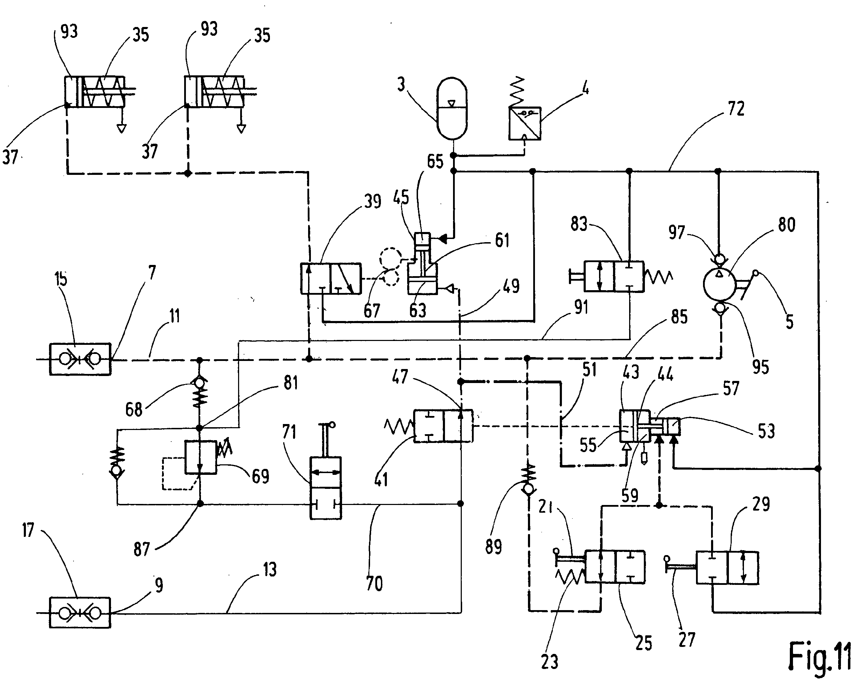

Zur Erläuterung des Verständnisses der Funktionsweise sind in den Hydraulikschaltungen der Fig. 2 bis 11 Leitungsverbindungen zwischen den Komponenten unterschiedlich dargestellt. Die den Hochdruck oder Speicherdruck führenden Leitungen sind jeweils mit vergrößerter Strichstärke dargestellt, und Leitungen, die Steuerdruck führen, sind strichpunktiert gezeichnet. In den Fig. 9 und 11 sind zudem Leitungen, die Niederdruck führen, gestrichelt dargestellt.

Von zu betätigenden Bremszylindern eines betreffenden Anhängers sind in den Fig. 2 bis 11 jeweils zwei mit 35 bezeichnete Bremszylinder dargestellt, deren Betätigungsseite 37 mit der Ausgangsseite eines Betätigungsventils 39 verbunden ist. Dieses ist durch ein 3/2-Wegeventil gebildet, das eingangsseitig an die erste Steuerleitung 11 sowie an den Druckspeicher 3 angeschlossen ist. Für die Steuerung der Bremszylinder 35 ist das Betätigungsventil 39 mittels einer Steuereinheit betätigbar, die ein Steuerventil 41, einen ersten Druckübersetzer 43 sowie einen zweiten Druckübersetzer 45 aufweist. Das Steuerventil 41 ist ein in die Schließstellung vorgespanntes 2/2-Wegeventil, das durch den ersten Druckübersetzer 43 mechanisch in die Öffnungsstellung schaltbar ist. Dem zweiten Druckübersetzer 45, der über eine Verbindungsleitung 49 mit der Ausgangsseite 47 des Steuerventils 41 verbunden ist, wird bei dessen geöffneter Stellung über die in Fig. 2 gestrichelt gezeichneten Leitungsabschnitte ein Steuerdruck zugeführt. Über einen Zweig 51 ist die Verbindungsleitung 49 auch mit dem ersten Druckübersetzer 43 in Verbindung. Das Steuerventil 41 in Form eines 2/2-Wegeventils, das in die Schließstellung vorgespannt ist, ist mittels des ersten Druckübersetzers 43 mechanisch in die in Fig. 2 gezeigte Offenstellung schaltbar.

Der erste Druckübersetzer 43, der eine Doppelkolbeneinheit 44 aufweist, die vier Fluidräume voneinander trennt, ist mit einem ersten Fluidraum 53 an der kleinen Kolbenfläche mit dem Druckspeicher 3 in Verbindung. Ein zweiter Fluidraum 55 an der großen Kolbenfläche ist über die Verbindungsleitung 49, 51 mit dem zweiten Druckübersetzer 45 in Verbindung. Ein dritter Fluidraum 57 an der kleinen Kolbenstangenfläche ist an das Umschaltventil 25 angeschlossen. Schließlich ist der erste Druckübersetzer 43 mit seinem vierten Fluidraum 59, der sich an der großen Kolbenstangenfläche befindet, mit der Umgebung verbunden.

Der für die mechanische Betätigung des Betätigungsventils 39 vorgesehene zweite Druckübersetzer 45 weist, wie der erste Druckübersetzer 43, eine Doppelkolbeneinheit 61 auf, die einen ersten Fluidraum 63 an der großen Kolbenfläche von einem Fluidraum 65 an der kleinen Kolbenfläche trennt. Dieser Fluidraum 65 ist mit dem Druckspeicher 3 in Verbindung, während der Fluidraum 63 an der großen Kolbenfläche mit der Verbindungsleitung 49 verbunden ist.

Bei dem in Fig. 2 gezeigten Betriebszustand des Einleitung-Fahrbetriebs ist nur die erste Steuerleitung 11 über die Schnellkupplung 15 mit der Zugeinheit verbunden. Als Serviceleitung erhält die erste Steuerleitung 11 im Fahrbetrieb den entsprechend der Betätigung des Bremspedals des nicht gezeigten Traktors generierten Bremsbetätigungsdruck, je nach Betätigung des Bremspedals mit einem Druck bis 150 bar. Dieser Betätigungsdruck wird bei geöffneter Stellung des Betätigungsventils 39, wie in Fig. 2 gezeigt, an die Betätigungsseiten 37 der Bremszylinder 35 für die entsprechenden Bremsvorgänge weitergeleitet. Die mechanische Getriebeverbindung 67 zwischen dem zweiten Druckübersetzer 45 und dem Betätigungsventil 39 ist so ausgebildet, dass dieses in die Offenstellung geschaltet ist, wenn die Doppelkolbeneinheit 61 angehoben ist, d.h. wenn im Fluidraum 63 an der großen Kolbenseite ein Steuerdruck ansteht, der die Kolbenkraft übersteigt, die der Druck des Speichers 3 an der kleinen Kolbenfläche des Fluidraums 65 erzeugt. Die Flächenverhältnisse zwischen großer Kolbenfläche und kleiner Kolbenfläche sind hierfür derart gewählt, dass ein Steuerdruck von zumindest 1 bar ausreicht, um die Kolbeneinheit 61 anzuheben und das Betätigungsventil 39, wie in Fig. 2 gezeigt, zu öffnen. Zur Generierung dieses Steuerdrucks ist an der ersten Steuerleitung 11 über ein Rückschlagventil 68 ein Druckschließventil 69 angeschlossen, das auf einen Schließdruck von zumindest 1 bar eingestellt ist und bei in der ersten Steuerleitung 11 vorhandenem Bremsdruck den zumindest 1 bar betragenden Steuerdruck in einer Steuerdruckleitung 70 zur Verfügung stellt, der über ein zweites Betätigungsventil 71, das bei Einleitung-Betrieb manuell in die Offenstellung geschaltet ist, zur Eingangsseite des Steuerventils 41 weitergeleitet wird, so dass, bei geöffnetem Steuerventil 41, der Steuerdruck über die Verbindungsleitung 49 im ersten Fluidraum 63 des zweiten Druckübersetzers 45 wirkt und die Kolbeneinheit 61 anhebt, um das Betätigungsventil 39 zu öffnen.

Für den Fahrbetrieb muss das Steuerventil 41 gegen die Wirkung der an ihm wirkenden Vorspannung in die in Fig. 2 gezeigte Offenstellung geschaltet sein, d.h. die Kolbeneinheit 44 des mit dem Steuerventil 41 mechanisch gekuppelten ersten Druckübersetzers 43 muss, bei Sichtweise der Fig. 2 bis 11, nach links bewegt sein. Dies geschieht durch den im ersten Fluidraum 53 wirkenden, über die Druckleitung 72 zugeführten Druck des Speichers 3, dem im dritten Fluidraum 57 kein Gegendruck entgegenwirkt, da sowohl Umschaltventil 25 als auch Schaltventil 29 der Umschalteinheit geschlossen sind.

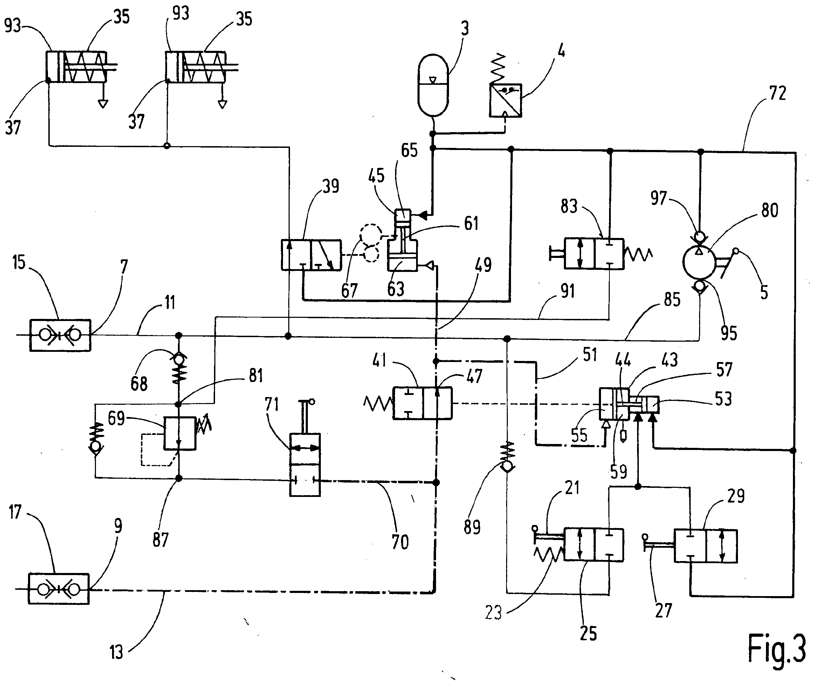

Die Fig. 3 zeigt den Betriebszustand "Zweileitung-Fahrbetrieb". Anders als beim Einleitung-Fahrbetrieb von Fig. 2 wird der Steuerdruck nicht über das an der Steuerleitung 11 angeschlossene Druckschließventil 69 gewonnen, da dessen Ausgangsseite 87 wegen des bei diesem Betriebszustand geschlossenen zweiten Betätigungsventil 71 von dem Steuerventil 41 getrennt ist, sondern der Steuerdruck wird durch die zweite Steuerleitung 13 zur Verfügung gestellt. Als Pilotleitung liefert die zweite Steuerleitung 13 an die Eingangsseite des Steuerventils 41 den beispielsweise durch Lösen eines Handbremshebels des Traktors generierten Steuerdruck, der bei geöffnetem Steuerventil 41 im ersten Fluidraum 63 des zweiten Druckübersetzers 45 wirkt und die Doppelkolbeneinheit 61 anhebt, so dass das Betätigungsventil 39 in seine in Fig. 3 gezeigte Stellung gelangt. Wie bei Fig. 2 erfolgt daher beim Fahrbetrieb die Bremsbetätigung entsprechend dem in der ersten Steuerleitung 11 jeweils wirksamen Bremsdruck.

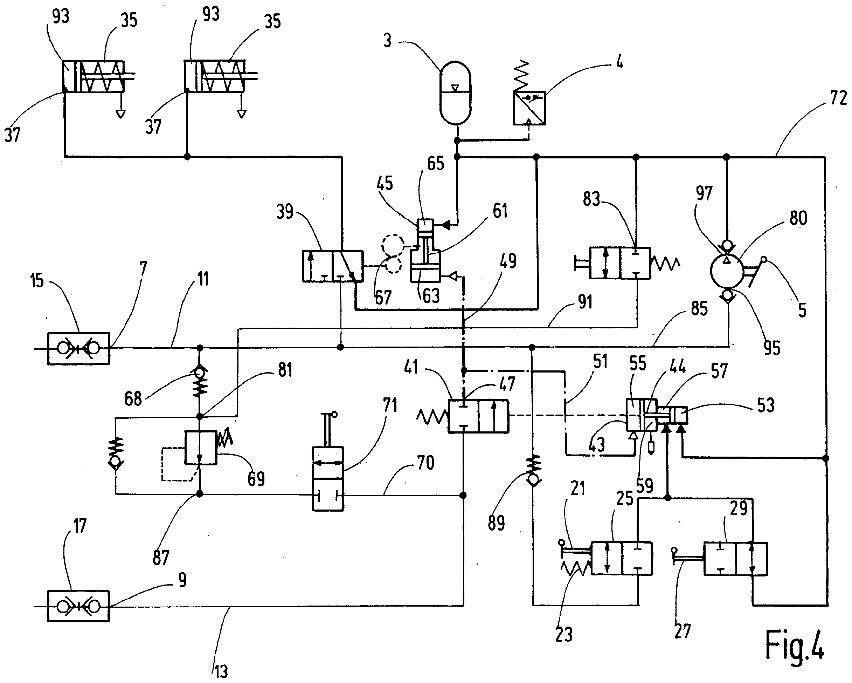

Für den in Fig. 4 gezeigten Einleitung-Parkbetrieb wird das Schaltventil 29 der Umschalteinheit durch manuelles Betätigen des Stellhebels 27 geöffnet. Über die Druckleitung 72 liegt dadurch der Versorgungsdruck des Druckspeichers 3 nicht nur am ersten Fluidraum 53, sondern auch am vierten Fluidraum 57 des ersten Druckübersetzers 43 an. Bei diesem Gleichdruck der miteinander verbundenen Fluidräume 53 und 57 bewegt sich die Doppelkolbeneinheit 44 aufgrund der am Steuerventil 41 wirkenden mechanischen Vorspannung in Fig. 4 nach rechts, so dass das Steuerventil 41 schließt. Bei dem dadurch bewirkten Fehlen eines Steuerdrucks in der Verbindungsleitung 49 bewegt sich die Doppelkolbeneinheit 61 des zweiten Druckübersetzers 45 in Fig. 4 nach unten, wodurch das Betätigungsventil 39 in die in Fig. 4 gezeigte Stellung gelangt, bei der über die Druckleitung 72 der Versorgungsdruck des Speichers 3 die Bremszylinder 35 in die Bremsstellung ausfahren lässt. Bei der Absenkbewegung der Doppelkolbeneinheit 61 des zweiten Druckübersetzers 45 fließt das Öl aus dem ersten Fluidraum 63 zum zweiten Fluidraum 55 des ersten Druckübersetzers 43 zurück, dessen Doppelkolbeneinheit 44 sich nach rechts bewegt.

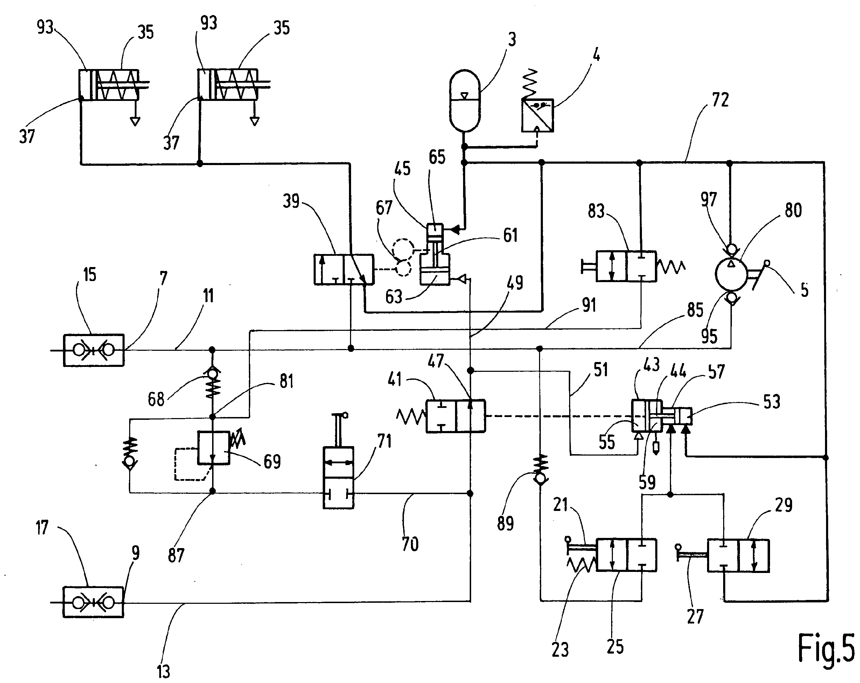

Bei dem Zweileitung-Fahrbetrieb, wie er in Fig. 5 dargestellt ist, ist der Parkbremsvorgang bei in der Schließstellung befindlichem zweiten Betätigungsventil 71 sowohl vom Traktor her als auch mit Hilfe der Umschalteinheit (Ventile 25 und 29) anhängerseitig manuell auslösbar. Für die traktorseitige Auslösung wird die zweite Steuerleitung 13, als Pilotleitung, weitgehend drucklos (< 1 bar) gemacht, beispielsweise aufgrund der Betätigung des Handbremshebels des Traktors, was trotz in Offenstellung befindlichem Steuerventil 41 die Absenkbewegung der Doppelkolbeneinheit 61 des zweiten Druckübersetzers 45 zur Folge hat, so dass das Betätigungsventil 39 in die Stellung gelangt, in der es den Speicher 3 mit den Bremszylindern 35 für den Parkbremsvorgang verbindet. Alternativ kann durch manuelles Öffnen des Schaltventils 29 der Umschalteinheit, was das Umschalten des ersten Druckübersetzers 43 bewirkt, das Steuerventil 41 geschlossen werden, so dass die Parkbremse, wie zuvor bei Fig. 4, betätigt wird. Sofern im Anmeldekontext von "Drucklosmachen" die Rede ist, schließt dies Druckwerte mit ein, die größer dem Steuerdruck oder kleiner dem Steuerdruck sind.

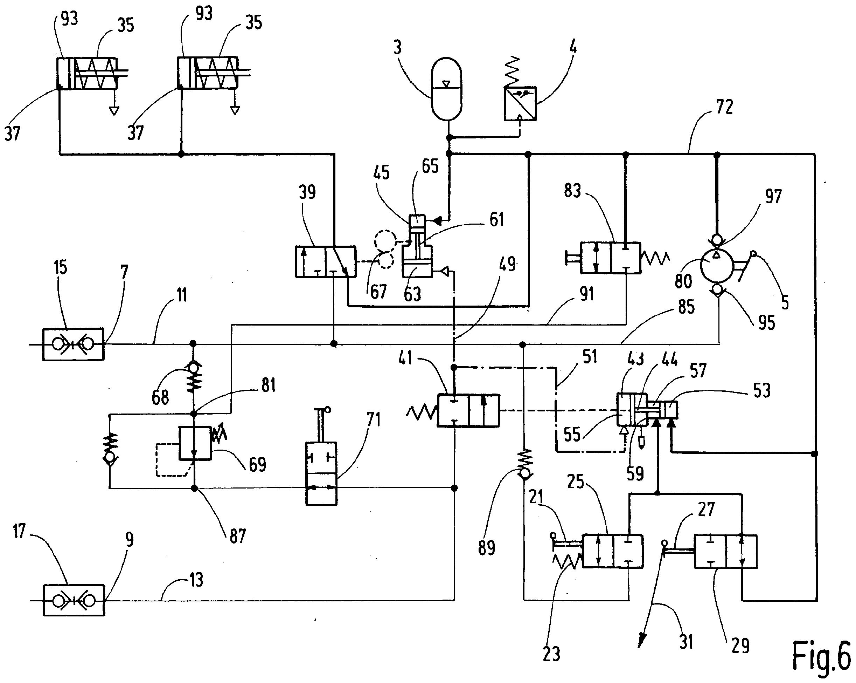

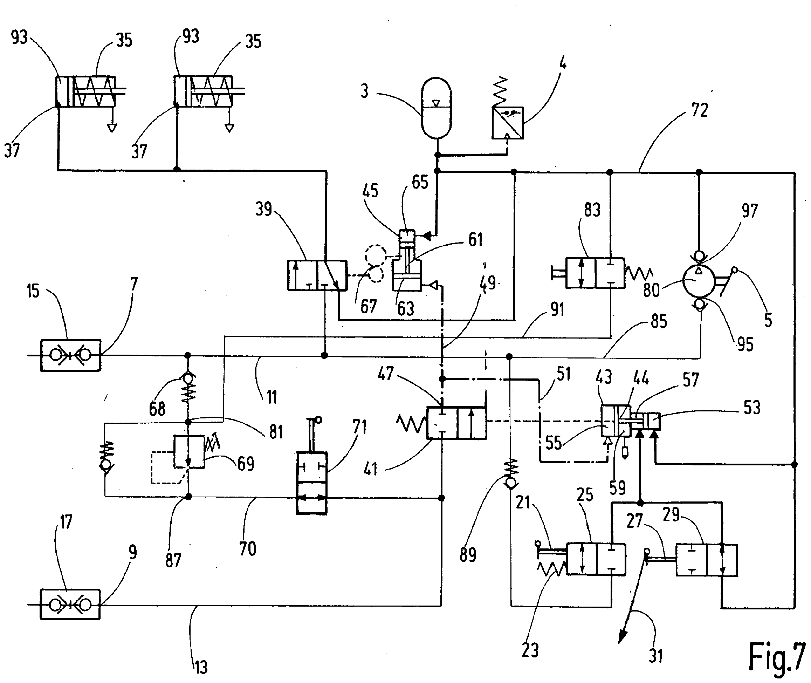

Für eine während des Einleitung-Fahrbetriebs, bei dem das zweite Betätigungsventil 71 in der geöffneten Stellung ist, erforderliche Notbremsung wird das Schaltventil 29 der Umschalteinrichtung über den Seilzug 31, s. Fig. 6, in die offene Stellung betätigt. In gleicher Weise wie bei der manuellen Auslösung des Parkbetriebs wird dadurch wegen des fehlenden Gegendrucks in den Fluidräumen 53 und 57 des ersten Druckübersetzers 43 das Steuerventil 41 in die Schließstellung gebracht, d.h. der Zustand der Schaltung von Fig. 6 entspricht dem Zustand der Schaltung von Fig. 4, wobei der wesentliche Unterschied darin besteht, dass das Steuerventil 71 aufgrund des Einleitungsbetriebes geschaltet ist und das Schaltventil 29 nicht manuell, sondern durch Seilzug 31 betätigt ist. Die Notbremsung während des Zweileitung-Fahrbetriebs erfolgt in analoger Weise durch das Schalten des Schaltventils 29 in die offene Stellung mittels des Seilzugs 31. Der einzige Unterschied der die Notbremsung bei Zweileitung-Fahrbetrieb zeigenden Schaltung von Fig. 7 gegenüber der Schaltung von Fig. 6 besteht daher darin, dass das zweite Betätigungsventil 71 beim Zweileitung-Fahrbetrieb in die Schließstellung geschaltet ist.

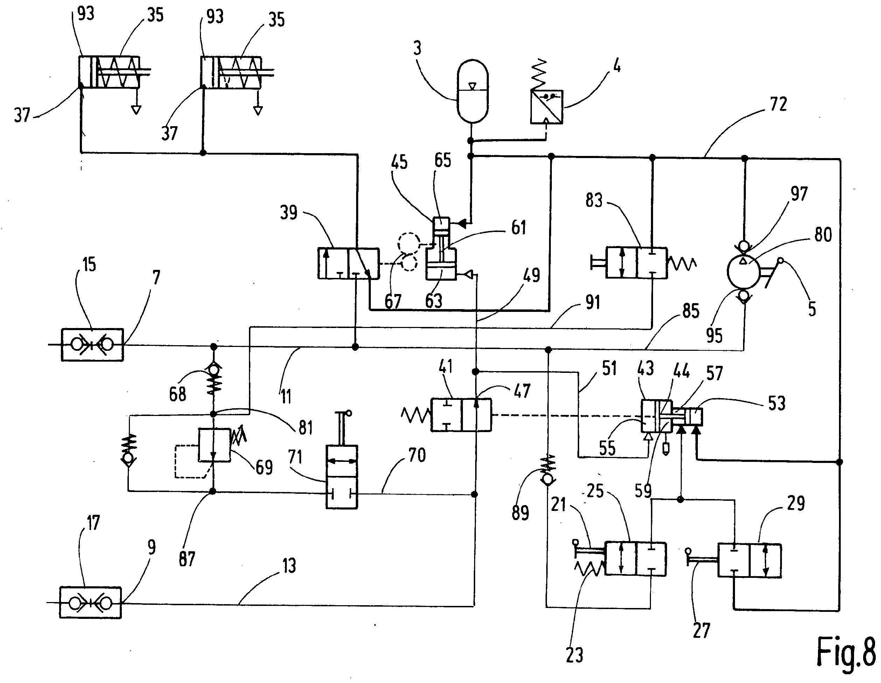

Die Fig. 8 verdeutlicht den Zustand der betätigten Parkbremse bei vom Traktor getrenntem Anhänger. Trotz geöffnetem Steuerventil 41 erhält bei getrenntem Anhänger der Fluidraum 63 des zweiten Druckübersetzers 45 über die Verbindungsleitung 49 keinen Steuerdruck, ungeachtet dessen, ob sich das zweite Betätigungsventil 71, wie in Fig. 8 gezeigt, in der geschlossenen Stellung oder in geöffneter Stellung befindet, weil weder aus der ersten Steuerleitung 11 noch aus der zweiten Steuerleitung 13 ein Steuerdruck lieferbar ist. Bei abgesenkter Position der Doppelkolbeneinheit 61 des zweiten Druckübersetzers 45 ist daher das Betätigungsventil 39 in der Schaltstellung, in der die Bremszylinder 35 über den Druck des Speichers 3 parkbetätigt sind.

Die Fig. 9 verdeutlicht, ausgehend von dem in Fig. 8 gezeigten Zustand, das manuelle Lösen der Parkbremse mittels der Handpumpe 80. Hierfür wird durch manuelles Schalten eines dritten Betätigungsventils 83 die Eingangsseite 81 des Druckschließventils 69 über eine Hochdruck-Verbindungsleitung 91 mit der Druckleitung 72 am Speicher 3 verbunden. Das Druckschließventil 69 generiert dadurch in der Steuerdruckleitung 70 den Steuerdruck, der über das geöffnete Steuerventil 41 im ersten Fluidraum 63 des zweiten Druckübersetzers 45 wirksam ist, um die Doppelkolbeneinheit 61 anzuheben und das Betätigungsventil 39 dadurch in die in Fig. 9 gezeigte Schaltstellung bringt. In diesem Zustand sind die Arbeitsräume 93 der Bremszylinder 35, die bei betätigter Parkbremse den hohen Druck des Druckspeichers 3 führen, mit der ersten Steuerleitung 11 und von dieser über eine daran anschließende Verbindungsleitung 85 mit der Saugseite 95 der Handpumpe 80 in Verbindung. Bei manueller Betätigung der Handpumpe 80, die mit ihrer Druckseite 97 mit der Druckleitung 72 des Speichers 3 in Verbindung ist, werden Steuerleitung 11 und Verbindungsleitung 85 zu Niederdruckleitungen, über die der Druck in den Arbeitsräumen 93 abgebaut wird und die Parkbremse dadurch gelöst wird.

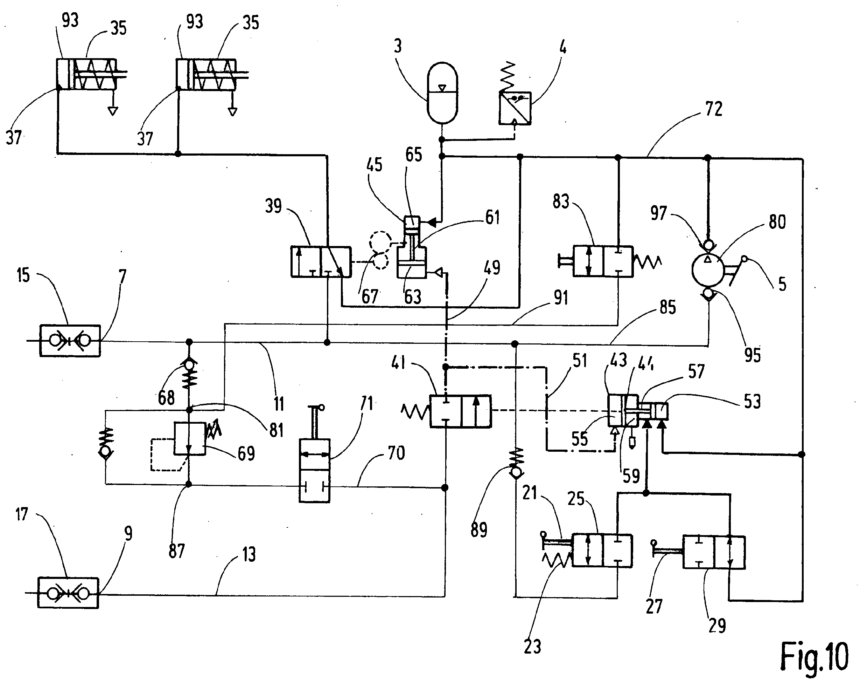

Ausgehend von dem in Fig. 9 gezeigten Zustand zeigt Fig. 10 das erneute Betätigen der Parkbremse, nachdem diese über die Handpumpe 80 gelöst war. Für das erneute Aktivieren der Parkbremse wird die Umschalteinheit durch Schalten des Schaltventils 29 in die geöffnete Stellung betätigt, so dass durch fehlenden Gegendruck in den Fluidräumen 53 und 57 des ersten Druckübersetzers 43 das Steuerventil 41 durch seine Vorspannung in die Schließstellung gelangt. Bei dadurch im Fluidraum 63 des zweiten Druckübersetzers 45 fehlendem Steuerdruck senkt sich dessen Kolbeneinheit 61, wobei das aus dem Fluidraum 63 verdrängte Öl in den Fluidraum 55 des ersten Druckübersetzers 43 zurückströmt. Bei der sich ergebenden Schaltstellung des Betätigungsventils 39 ist der Druck des Speichers 3 wiederum in den Arbeitsräumen 93 der Bremszylinder 35 zur Betätigung der Parkbremse wirksam.

Die Fig. 11 verdeutlicht einen Zustand, bei dem die zuvor über die Umschalteinheit betätigte Parkbremse wiederum durch die Betätigung der Handpumpe 80 gelöst wird. Hierfür sind von der Umschalteinheit das Schaltventil 29 geschlossen und das Umschaltventil 25 geöffnet. Bei ohne Gegendruck im Fluidraum 53 des ersten Druckübersetzers 43 hierbei wirksamem Speicherdruck ist das Steuerventil 41 geöffnet. Durch Umschalten des dritten Betätigungsventils 83 sowie des zweiten Betätigungsventils 71 aus den in Fig. 11 gezeigten Stellungen in die Offenstellungen gelangt dadurch der vom Druckschließventil 69 generierte Steuerdruck vom Steuerventil 41 zum Fluidraum 63 des zweiten Druckübersetzers 45, so dass bei Anheben der Doppelkolbeneinheit 61 das Betätigungsventil 39 in die in Fig. 11 gezeigte Stellung kommt. Wie bei dem in Fig. 9 gezeigten Zustand sind nun die Arbeitsräume 93 der Bremszylinder 35 bei Betätigung der Handpumpe 80 über das geöffnete Betätigungsventil 39, die erste Steuerleitung 11 und die Verbindungsleitung 85, die jeweils zu Niederdruckleitungen werden, entleerbar, so dass die Parkbremse wiederum gelöst ist.

## Patentansprüche

1. Bremsvorrichtung, insbesondere für von einem Zugfahrzeug gezogene Anhänger, zumindest bestehend aus
- einem Bremszylinder (35);
- einem hydraulischen Versorgungsspeicher (3);
- zwei Druckübersetzern (43, 45);
- einer Steuerleitung (11); und
- Ventilen (39, 41), **dadurch gekennzeichnet, dass** der eine Druckübersetzer (43) durch mechanisches Betätigen eines Steuerventils (41) den zweiten Druckübersetzer (45) mit ansteuert.

2. Bremsvorrichtung nach Anspruch 1, **dadurch gekennzeichnet, dass** der eine Druckübersetzer (43) einen Ausgleichskolben in Form einer Doppelkolbeneinheit (44) aufweist, der über einen ersten Fluidraum (53) mit seiner kleinen Kolbenfläche an den Versorgungsspeicher (3), über einen zweiten Fluidraum (55) mit seiner großen Kolbenfläche an eine Verbindungsleitung (49, 51) zwischen Steuerventil (41) und dem zweiten Druckübersetzer (45), über einen dritten Fluidraum (57) mit seiner kleinen Kolbenstangenfläche an eine Umschalteinheit (25, 29) zum manuellen Bedienen der Bremsvorrichtung als Parkbremse und über einen vierten Fluidraum (59) mit seiner großen Kolbenstangenfläche an die Umgebung angeschlossen ist.

3. Bremsvorrichtung nach Anspruch 1 oder 2, **dadurch gekennzeichnet, dass** der zweite Druckübersetzer (45) einen Schaltkolben in Form einer Doppelkolbeneinheit (61) aufweist, der über einen ersten Fluidraum (63) mit seiner kleinen Kolbenfläche an den Versorgungsspeicher (3) und der über einen zweiten Fluidraum (65) mit seiner großen Kolbenfläche an die Verbindungsleitung (49) angeschlossen ist.

4. Bremsvorrichtung nach Anspruch 3, **dadurch gekennzeichnet, dass** der Schaltkolben (61) des zweiten Druckübersetzers (45) mechanisch ein Betätigungsventil (39) ansteuert, das eingangsseitig an die eine Steuerleitung (11) sowie an den Versorgungsspeicher (3) und das ausgangsseitig an den jeweiligen Bremszylinder (35) auf dessen Betätigungsseite (37) angeschlossen ist.

5. Bremsvorrichtung nach einem der vorstehenden Ansprüche, **dadurch gekennzeichnet, dass** zwischen der einen Steuerleitung (11) und dem Versorgungsspeicher (3) eine Handpumpe (80) zum Lösen des jeweiligen Bremszylinders (35) angeordnet ist.

6. Bremsvorrichtung nach einem der vorstehenden Ansprüche, **dadurch gekennzeichnet, dass** an die eine Steuerleitung (11) ein Druckschließventil (69) angeschlossen ist, das über ein weiteres zweites Betätigungsventil (71) auf die Eingangsseite des Steuerventils (41) geschaltet ist, und dass die Eingangsseite (81) des Druckschließventils (69) über ein drittes Betätigungsventil (83) an den Versorgungsspeicher (3) anschließbar ist.

7. Bremsvorrichtung nach einem der vorstehenden Ansprüche, **dadurch gekennzeichnet, dass** die Umschalteinheit (25, 29) mindestens ein Schaltventil (25) aufweist, das eingangsseitig an den dritten Fluidraum (57) mit der kleineren Kolbenstangenfläche des einen Druckübersetzers (43) und ausgangsseitig an eine Verbindungsleitung (85) zwischen der einen Steuerleitung (11) und der Handpumpe (80) angeschlossen ist.

8. Bremsvorrichtung nach einem der vorstehenden Ansprüche, **dadurch gekennzeichnet, dass** an die Eingangsseite des Schaltventils (25) der Umschalteinheit die Ausgangsseite eines weiteren Schaltventils (29) angeschlossen ist, das vorzugsweise über einen Seilzug (31) fernbetätigbar ist und dessen Eingangsseite an den Versorgungsspeicher (3) angeschlossen ist.

9. Bremsvorrichtung nach einem der vorstehenden Ansprüche, **dadurch gekennzeichnet, dass** eine zweite Steuerleitung (13) vorhanden ist, die mit der Eingangsseite des Steuerventils (41) verbunden ist, an der auch das Druckschließventil (69) über das zweite Betätigungsventil (71) angeschlossen ist.

10. Bremsvorrichtung nach einem der vorstehenden Ansprüche, **dadurch gekennzeichnet, dass** eine mechanische Kopplung zwischen der Doppelkolbeneinheit (44) und dem Steuerventil (41) besteht.

11. Baueinheit für eine Bremsvorrichtung nach einem der vorstehenden Ansprüche, bestehend aus mindestens zwei Druckübersetzern (43, 45), einem Versorgungsspeicher (3) und Ventilen (39, 41) zum Ansteuern und Betätigen der Baueinheit.

## Claims

1. A braking device, in particular for trailers pulled by a towing vehicle, at least consisting of
- a brake cylinder (35);
- a hydraulic supply storage unit (3);
- two pressure boosters (43, 45);
- a control line (11); and
- valves (39, 41),
**characterised in that**
the one pressure booster (43) controls the second pressure booster (45) by mechanical actuation of a control valve (41).

2. The braking device according to claim 1, **characterised in that** the one pressure booster (43) has a balance piston in the form of a double piston unit (44) which is connected to the supply storage unit (3) via a first fluid chamber (53) with its small piston face, to a connecting line (49, 51) between control valve (41) and the second pressure booster (45) via a second fluid chamber (55) with its large piston face, to a switching unit (25, 29) for manually operating the braking device as a parking brake via a third fluid chamber (57) with its small piston rod face and to the environment via a fourth fluid chamber (59) with its large piston rod face.

3. The braking device according to claim 1 or 2, **characterised in that** the second pressure booster (45) has a switching piston in the form of a double piston unit (61) which is connected to the supply storage unit (3) via a first fluid chamber (63) with its small piston face and to the connecting line (49) via a second fluid chamber (65) with its large piston face.

4. The braking device according to claim 3, **characterised in that** the switching piston (61) of the second pressure booster (45) mechanically controls an actuating valve (39) which is connected on its input side to the one control line (11) as well as to the supply storage unit (3) and which is connected on its output side to the respective brake cylinder (35) on its actuating side (37).

5. The braking device according to one of the preceding claims, **characterised in that** a hand pump (80) is arranged between the one control line (11) and the supply storage unit (3) to release the respective brake cylinder (35).

6. The braking device according to one of the preceding claims, **characterised in that** a pressure closing valve (69) is connected to the one control line (11) which is toggled via a further, second actuating valve (71) on the input side of the control valve (41), and that the input side (81) of the pressure closing valve (69) can be connected to the supply storage unit (3) via a third actuating valve (83).

7. The braking device according to one of the preceding claims, **characterised in that** the switching unit (25, 29) has at least one shift valve (25) which is connected on the input side to the third fluid chamber (57) with the smaller piston rod face of the one pressure booster (43) and on the output side to a connecting line (85) between the one control line (11) and the hand pump (80).

8. The braking device according to one of the preceding claims, **characterised in that** the output side of a further shift valve (29) is connected to the input side of the shift valve (25) of the switching unit, which shift valve (29) can be operated remotely via a cable (31) and the input side of which is connected to the supply storage unit (3).

9. The braking device according to one of the preceding claims, **characterised in that** a second control line (13) is present which is connected to the input side of the control valve (41) to which the pressure closing valve (69) is also connected via the second actuating valve (71).

10. The braking device according to one of the preceding claims, **characterised in that** a mechanical coupling exists between the double piston unit (44) and the control valve (41).

11. A structural unit for a braking device according to one of the preceding claims, consisting of at least two pressure boosters (43, 45), a supply store (3) and valves (39, 41) for controlling and actuating the structural unit.

## Revendications

1. Système de freinage, notamment d'une remorque remorquée par un véhicule tracteur, constitué au moins de
- un cylindre (35) de frein ;
- un réservoir (3) hydraulique d'alimentation ;
- deux multiplicateurs (43, 45) de pression ;
- une ligne (11) de commande et
- des soupapes (39, 41),
**caractérisé en ce que** le un multiplicateur (43) de pression commande le deuxième multiplicateur (45) de pression par actionnement mécanique d'une soupape (41) de commande.

2. Système de freinage suivant la revendication 1, **caractérisé en ce que** le un multiplicateur (43) de pression a un piston de compensation sous la forme d'un groupe (44) à double piston, qui est raccordé par un premier espace (53) pour du fluide, par sa petite surface de piston, au réservoir (3) d'alimentation, par un deuxième espace (55) pour du fluide, par sa grande surface de piston, à une ligne (49, 51) de liaison entre la soupape (41) de commande et le deuxième multiplicateur (45) de pression, par un troisième espace (57) pour du fluide, par sa petite surface de tige de piston, à une unité (25, 29) de commutation, pour la commande manuelle du système de frein en frein de stationnement, et par un quatrième espace (59) pour du fluide, par sa grande surface de tige de piston, à l'atmosphère ambiante.

3. Système de freinage suivant la revendication 1 ou 2, **caractérisé en ce que** le deuxième multiplicateur (45) de pression a un piston de commutation sous la forme d'un groupe (61) à double piston, qui est raccordé par un premier espace (63) pour du fluide, par sa petite surface de piston, au réservoir (3) d'alimentation et par un deuxième espace (65) pour du fluide, par sa grande surface de piston, à la ligne (49) de liaison.

4. Système de freinage suivant la revendication 3, **caractérisé en ce que** le piston (61) de commutation du deuxième multiplicateur (45) de pression commande mécaniquement une soupape (39) d'actionnement, qui est raccordée du côté de l'entrée à la une ligne (11) de commande, ainsi qu'au réservoir (3) d'alimentation et, du côté de la sortie, au cylindre (35) de frein respectif sur son côté (37) d'actionnement.

5. Système de freinage suivant l'une des revendications précédentes, **caractérisé en ce qu'**une pompe (80) manuelle est, pour desserrer le cylindre (35) de frein respectif, montée entre la une ligne (11) de commande et le réservoir (3) d'alimentation.

6. Système de freinage suivant l'une des revendications précédentes, **caractérisé en ce qu'**à la une ligne (11) de commande est raccordée une soupape (69) de fermeture de pression, qui, par une autre deuxième soupape (71) d'actionnement, est montée du côté de l'entrée de la soupape (41) de commande, et **en ce que** le côté (81) d'entrée de la soupape (69) de fermeture de pression peut être raccordé au réservoir (3) d'alimentation par une troisième soupape (83) d'actionnement.

7. Système de freinage suivant l'une des revendications précédentes, **caractérisé en ce que** l'unité (25, 29) de commutation a au moins une soupape (25) de commutation, qui, du côté de l'entrée, est raccordée au troisième espace (57) pour du fluide par la surface de la tige de piston la plus petite du un multiplicateur (43) de pression et, du côté de la sortie, à une ligne (85) de liaison entre la une ligne (11) de commande et la pompe (80) manuelle.

8. Système de freinage suivant l'une des revendications précédentes, **caractérisé en ce qu'**au côté d'entrée de la soupape (25) de commutation de l'unité de commutation, est raccordé le côté de sortie d'une autre soupape (29) de commutation, qui peut être télécommandée, de préférence par une commande (31) par câble, et dont le côté d'entrée est raccordé au réservoir (3) d'alimentation.

9. Système de freinage suivant l'une des revendications précédentes, **caractérisé en ce qu'**il y a une deuxième ligne (13) de commande, qui est reliée au côté d'entrée de la soupape (41) de commande, auquel est raccordée également la soupape (69) de fermeture de pression, par la deuxième soupape (71) d'actionnement.

10. Système de freinage suivant l'une des revendications précédentes, **caractérisé en ce qu'**il y a un accouplement mécanique entre le groupe (44) à double piston et la soupape (41) de commande.

11. Unité de construction pour un système de freinage suivant l'une des revendications précédentes, constituée d'au moins deux multiplicateurs (43, 45) de pression, d'un réservoir (3) d'alimentation et de soupapes (39, 41) pour commander et actionner l'unité de construction.
